# EUROPÄISCHE PATENTANMELDUNG

(11) **EP 3 292 951 A1**
(43) Veröffentlichungstag der Anmeldung: **14.03.2018**
(21) Anmeldenummer: 16188143.8
(22) Anmeldetag: 09.09.2016
(51) Int. Cl.: B23Q 7/04, B23Q 7/14, B23Q 39/00

(54) **VERFAHREN ZUR INDIREKTEN HANDHABUNG MINDESTENS EINES AUF EINER SPANNPALETTE AUFGESPANNTEN WERKSTÜCKS SOWIE VORRICHTUNG HIERZU**

(71) Anmelder: Anger Machining GmbH, 4050 Traun (AT)
(72) Erfinder: Zeilinger, Albert, 4541 Adlwang (AT); Märzinger, Martin, 4154 Kollerschlag (AT)
(74) Vertreter: Jell, Friedrich

(57) **Zusammenfassung**

Es wird eine Vorrichtung (1) und ein Verfahren zur indirekten Handhabung mindestens eines auf einer Spannpalette (2.1, 2.2, 2.3, 2.4) aufgespannten Werkstücks (5.1, 5.2, 5.3, 5.4) im Werkstückfluss zwischen Handlingroboter (4) und Werkzeugmaschine (3, 300) gezeigt, welche Werkzeugmaschine (3, 300) wenigstens eine erste Spanneinrichtung (9) eines Nullpunktspannsystems (10) aufweist, bei dem die Spannpalette (2.1, 2.2, 2.3, 2.4), die mindestens ein erstes Spannelement (8) für das Nullpunktspannsystem (10) mit der Werkzeugmaschine (3, 300) aufweist, vom, mindestens eine zweite Spanneinrichtung (12) aufweisenden Handlingroboter (4) mit dieser zweiten Spanneinrichtung (12) gehalten und relativ zur Werkzeugmaschine (3, 300) bewegt wird und die Spannpalette (2.1, 2.2, 2.3, 2.4) mit dem aufgespannten Werkstück (5.1, 5.2, 5.3, 5.4) an einem beweglichen und die erste Spanneinrichtung (9) aufweisenden Werkstückhalter (7) der Werkzeugmaschine (3, 300) nullpunkt-gespannt wird, indem das erste Spannelement (8) der Spannpalette (2.1, 2.2, 2.3, 2.4) mit der ersten Spanneinrichtung (9) am Werkstückhalter (7) verbunden wird. Um ein schnelles und reproduzierbares Verfahren zu schaffen, wird vorgeschlagen, dass die zweite Spanneinrichtung (12) des Handlingroboters (4) mit dem ersten Spannelement (8) der Spannpalette (2.1, 2.2, 2.3, 2.4) verbunden und damit die Spannpalette (2.1, 2.2, 2.3, 2.4) vom Handlingroboter (4) bei dieser Relativbewegung zur Werkzeugmaschine (3, 300) gehalten wird.

## Beschreibung

Die Erfindung betrifft eine Vorrichtung und ein Verfahren zur indirekten Handhabung mindestens eines auf einer Spannpalette aufgespannten Werkstücks im Werkstückfluss zwischen Handlingroboter und Werkzeugmaschine, welche Werkzeugmaschine wenigstens eine erste Spanneinrichtung eines Nullpunktspannsystems aufweist, bei dem die Spannpalette, die mindestens ein erstes Spannelement für das Nullpunktspannsystem mit der Werkzeugmaschine aufweist, vom, mindestens eine zweite Spanneinrichtung aufweisenden Handlingroboter mit dieser zweiten Spanneinrichtung gehalten und relativ zur Werkzeugmaschine bewegt wird und die Spannpalette mit dem aufgespannten Werkstück an einem beweglichen und die erste Spanneinrichtung aufweisenden Werkstückhalter der Werkzeugmaschine nullpunkt-gespannt wird, indem das erste Spannelement der Spannpalette mit der ersten Spanneinrichtung am Werkstückhalter verbunden wird.

Bei flexiblen Fertigungszellen ist es bekannt (EP1787750A1), einen Handlingroboter im Werkstückfluss von und zu einer Werkzeugmaschine vorzusehen, der mit seinen Zweibacken-Parallelgreifern eine Spannreinrichtung mit einem darauf aufgespannten Werkstuck handhabt bzw. manipuliert. Hierzu greifen die Zweibacken-Parallelgreifer des Handlingroboters an der Spannreinrichtung mit dem aufgespannten Werkstück an. Solche eine Art des Greifens kann jedoch nachteilig - beispielsweise bei höheren Lasten, höheren Manipulationsgeschwindigkeiten und/oder höheren positiven und negativen Beschleunigungen - ein sicheres Handhaben von Werkstücken nicht gewährleisten. Eine reproduzierbares Verfahren zur indirekten Handhabung von Werkstücken bzw. eine standfeste Fertigungszelle können sohin nicht sichergestellt werden.

Des Weiteren ist es bekannt, die Spannreinrichtung als Spannpalette auszuführen, welche mehrere zapfenförmige Spannelemente aufweist, die geeignet sind, mit einer Spanneinrichtung an der Werkzeugmaschine zur Ausbildung eines Nullpunktspannsystems zusammenzuwirken. Bekannt ist zudem, diese Spannreinrichtung an der Werkzeugmaschine auf einem beweglichen Werkstückhalter der Werkzeugmaschine vorzusehen.

Die Erfindung hat sich daher ausgehend vom eingangs geschilderten Stand der Technik die Aufgabe gestellt, ein Verfahren zur indirekten Handhabung eines Werkstücks derart zu verändern, dass Spannpaletten im Werkstückfluss zuverlässig gehandhabt werden können.

Die Erfindung löst die gestellte Aufgabe hinsichtlich des Verfahrens dadurch, dass die zweite Spanneinrichtung des Handlingroboters mit dem ersten Spannelement der Spannpalette verbunden und damit die Spannpalette vom Handlingroboter bei dieser Relativbewegung zur Werkzeugmaschine gehalten wird.

Wird die zweite Spanneinrichtung des Handlingroboters mit dem ersten Spannelement der Spannpalette verbunden und damit die Spannpalette vom Handlingroboter bei dieser Relativbewegung zur Werkzeugmaschine gehalten, kann eine besonders sichere Handhabung der Spannpalette ermöglicht werden, weil ein zum Nullpunktspannen vorgesehenes Spannelement auch eine standfeste Befestigung der Spannpalette am Handlingroboter sicherstellen kann. Die indirekte Handhabung des Werkstücks vom Handlingroboter kann damit erleichtert und sicherer erfolgen - was einen reproduzierbareren Werkstuckfluss zwischen Handlingroboter und Werkzeugmaschine, beispielsweise auch bei höheren Gewichtslasten, höheren Manipulationsgeschwindigkeiten und höheren positiven und negativen Beschleunigungen ergeben kann. Zudem kann sich damit das Verfahren vereinfachen, weil durch eine Möglichkeit des, vorzugsweise festen, Haltens der Spannpalette an deren Spannelement vom Handlingroboter keine vergleichsweise verfahrensaufwendigen Greifmaßnahmen ausgeführt werden müssen. Das erfindungsgemäße Verfahren kann daher gegenüber dem Stand der Technik nicht nur reproduzierbarer, sondern auch schneller erfolgen - was insbesondere auch bei einer Fertigungszelle die Taktzeit verbessern kann.

Ein Wechsel zwischen den Einspannungen am Handlingroboter und an der Werkzeugmaschine kann handhabungsfreundlich durchgeführt werden, wenn eine zwischen Handlingroboter und Werkzeugmaschine im Werkstückfluss vorgesehene Übergabeeinrichtung die Spannpalette übernimmt, wonach die erste oder zweite Spanneinrichtung das erste Spannelement der Spannpalette freigibt.

Um einen schnellen Werkzeugfluss, insbesondere bei der Übergabe der Spannpalette zwischen Handlingroboter und Werkzeugmaschine ermöglichen zu können, kann vorgesehen sein, dass die Übergabeeinrichtung das von der ersten oder zweiten Spanneinrichtung freigegebene erste Spannelement für ein Spannen frei zugänglich bereithält. Damit wird nämlich sichergestellt, dass das Spannelement mit der jeweiligen Spanneinrichtung am Handlingroboter oder an der Werkzeugmaschine unkompliziert verbunden werden kann.

Das Verfahren kann sich in der Handhabung weiter vereinfachen, wenn der Handlingroboter oder die Werkzeugmaschine die Spannpalette auf einer Auflage der Übergabeeinrichtung ablegt.

Der Werkstückfluss kann bei der Übergabe zwischen Handlingroboter und Werkzeugmaschine zeitlich gestrafft werden, wenn die auf einem Schlitten der Übergabeeinrichtung vorgesehene Auflage die Spannpalette zur Werkzeugmaschine oder zum Handlingroboter hin bewegt. Zudem ist es möglich, dass solch ein Schlitten die Kollisionsgefahr bei der Übergabe der Spannpalette verringert - was weiter zur Reproduzierbarkeit des Verfahrens beitragen kann.

Wird beim Nullpunktspannen der Werkstückhalter der Werkzeugmaschine zur lagefixierten Spannpalette hin bewegt, kann dies den Werkstückfluss weiter vereinfachen und das Verfahren verbessern.

Die Handhabung der Spannpalette kann von Bewegen auf weitere Handhabungsaufgaben, nämlich Sichern, erweitert werden, wenn der über mindestens eine Medienkupplung mit der Spannpalette verbindbare Handlingroboter die Werkstückspanneinrichtung an der jeweiligen Spannpalette betätigt.

Die Erfindung hat sich außerdem die Aufgabe gestellt, eine Vorrichtung zu schaffen, die trotz konstruktiver Einfachheit eine zuverlässige indirekte Handhabung eines auf einer Spannpalette aufgespannten Werkstücks im Werkstückfluss ermöglicht. Außerdem soll die Vorrichtung kurze Taktzeiten ermöglichen.

Die Erfindung löst die gestellte Aufgabe dadurch, dass die erste und zweite Spanneinrichtung von Werkstückhalter und Handlingroboter zum Spannen des ersten Spannelements der Spannpalette ausgebildet sind und dass die Vorrichtung eine Übergabeeinrichtung aufweist, die zwischen Handlingroboter und Werkzeugmaschine im Werkstückfluss vorgesehen und derart ausgebildet ist, ein Spannen des ersten Spannelements der Spannpalette mit der ersten Spanneinrichtung des Werkstückhalters oder mit der zweiten Spanneinrichtung des Handlingroboters zu ermöglichen.

Sind die erste und zweite Spanneinrichtung von Werkstückhalter und Handlingroboter zum Spannen des ersten Spannelements der Spannpalette ausgebildet, kann es möglich werden, dass der Handlingroboter das zum Nullpunktspannen ausgebildete Spannelement der Spannpalette verwenden kann, die Spannpalette zu halten und damit sicher zu manipulieren. Die konstruktive Ausführung des Spannelements an der Spannpalette stellt nämlich eine mechanisch belastbare Anschlussmöglichkeit auch für den Handlingroboter dar, wodurch eine zuverlässige indirekte Handhabung eines auf einer Spannpalette aufgespannten Werkstücks im Werkstückfluss gewährleistet werden kann. Aufgrund dieser standfesten Aufspannung der Spannpalette am Handlingroboter kann zudem eine schnelle indirekte Handhabung im Werkstückfluss möglich werden, wodurch auch kurzen Taktzeiten an der Vorrichtung erreichbar sind. All diese Vorteile können weiter ausgebaut werden, wenn die Vorrichtung eine Übergabeeinrichtung aufweist, die zwischen Handlingroboter und Werkzeugmaschine im Werkstückfluss vorgesehen und derart ausgebildet ist, ein Spannen des ersten Spannelements der Spannpalette mit der ersten Spanneinrichtung des Werkstückhalters oder mit der zweiten Spanneinrichtung des Handlingroboters zu ermöglichen.

Einfache Konstruktionsverhältnisse können sich ergeben, wenn die Übergabeeinrichtung eine Auflage für die Spannpalette aufweist. Die Spannpaletten können dann dort abgelegt werden, bis die jeweils andere Spanneinrichtung die Spannpalette aufspannt.

Ist die Auflage auf einem Schlitten vorgesehen, kann damit das Zuführen der Spannpalette zur Werkzeugmaschine bzw. zum Handlingroboter erleichtert werden - was die konstruktiven Voraussetzungen an der Werkzeugmaschine oder am Handlingroboter weiter verringern kann.

Die Spannpalette kann an der Übergabeeinrichtung konstruktiv einfach gelöst lagefixiert werden, wenn die Auflage mindestens einen Mitnehmer aufweist, der in wenigstens eine Ausnehmung, beispielsweise Sackbohrung oder durchgehende Bohrung, an der Spannpalette eingreifbar ausgebildet ist.

Weist die Übergabeeinrichtung mindestens einen Übergabebereich zum Be- und/oder Entladen mindestens einer Spannpalette auf, können durch Vermeidung aufwendiger Werkstückwechsler die konstruktiven Anforderungen an die Vorrichtung weiter reduziert werden.

Sind die erste und zweite Spanneinrichtung ihrer konstruktiven Ausführung ident, können Herstellungs- und Wartungsaufwand an der Vorrichtung weiter reduziert werden.

Die Möglichkeiten der Handhabung der Spannpalette vom Handlingroboter können erweitert werden, wenn die zweite Spanneinrichtung des Handlingroboters mindestens ein Kupplungselement für eine Medienkupplung mit der Spannpalette aufweist. Im Allgemeinen wird erwähnt, dass mit Hilfe dieser Medienkupplung Pneumatik, Fluid und/oder Elektronik einfach an- und abgekuppelt werden kann. Beispielsweise kann mit Hilfe der Medienkupplung der Handlingroboter auch mit Sensorik an der Spanneinrichtung verbunden werden, um so Parameter zum Werkstück abzufragen.

Ist die Medienkupplung an der Spannpalette mit einer zum Spannen des Werkstücks vorgesehenen Werkstückspanneinrichtung an der Spannpalette verbunden, kann das Handling des Roboters in Richtung Rüsten und/oder Beschicken der Spannpalette mit einem Werkstück erweitert werden.

Im Allgemeinen wird erwähnt, dass Handlingroboter als universell einsetzbare Bewegungsautomaten mit mehreren Achsen angesehen werden können, die dazu geeignet sind, Handhabungsaufgaben ausführen. Im Allgemeinen wird weiter erwähnt, dass unter einem Nullpunktspannsystem ein Spannsystem verstanden werden kann, mit dessen Hilfe eine Spannpalette reproduzierbar auf einer Werkzeugmaschine aufgespannt werden kann.

In den Figuren ist beispielsweise der Erfindungsgegenstand anhand einer Ausführungsvariante dargestellt. Es zeigen
- Fig. 1: eine Seitenansicht auf eine Vorrichtung mit einer indirekten Handhabung eines Werkstücks,
- Fig. 2: eine vergrößerte Teilansicht der Vorrichtung nach Fig. 1.

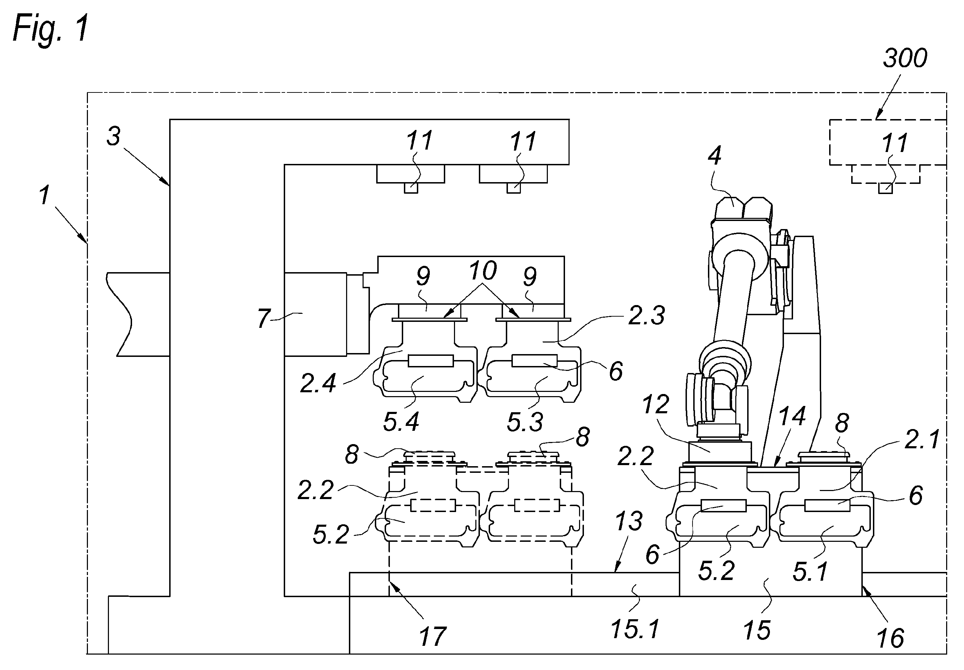

Gemäß Fig. 1 ist beispielsweise eine als flexible Fertigungszelle (FFZ) ausgebildete Vorrichtung 1 in Draufsicht dargestellt, welche Vorrichtung 1 eine flexible Fertigungszelle (FFZ) oder ein flexibles Fertigungssystem (FFS) sein kann.

Diese Vorrichtung 1 weist mehrere Spannpaletten 2.1, 2.2, 2.3, 2.4 sowie eine als Transferzentrum ausgebildete Werkzeugmaschine 3 und einen Handlingroboter 4 auf. Der Handlingroboter 4 beschickt die Werkzeugmaschine 3 mit Werkstücken 5.1, 5.2, 5.3, 5.4, die hierzu relativ zur Werkzeugmaschine 3 bewegt werden. Jeweils zwei Werkstücke 5.1, 5.2, 5.3, 5.4 sind auf einer Spannpaletten 2.1, 2.2, 2.3, 2.4 mit Hilfe einer Werkstückspanneinrichtung 6 aufgespannt, was eine indirekte Handhabung der Werkstücke 5.1, 5.2, 5.3, 5.4 im Werkstückfluss ermöglicht. Die vom Handlingroboter 4 an die Werkzeugmaschine 3 übergebene Spannpalette 2.1 wird am beweglichen Werkstückhalter 7, der in mindestens drei Raumrichtungen und vorzugsweise auch rotierend zu steuern ist, nullpunktgespannt - wofür die Spannpalette 2.1, 2.2, 2.3, 2.4 ein erstes Spannelement 8 aufweist, das mit einer ersten Spanneinrichtung 9 des beweglichen Werkstückhalters 7 zusammengespannt ein Nullpunktspannsystem 10 ausbildet. Diese nullpunktgespannten Werkstücke 5.3, 5.4 können dann den spindelgelagerten Werkzeugen 11 an der Werkzeugmaschine 3 zur Bearbeitung zugestellt werden.

Um die Werkstücke 5.1, 5.2, 5.3, 5.4 zur Werkzeugmaschine 3 relativ bewegen zu können, weist der Handlingroboter 4 eine zweite Spanneinrichtung 12 auf, mit der das Spannelement 8 der jeweiligen, zu manipulierenden Spannpalette 2.1, 2.2, 2.3, 2.4 2.1 festgehalten wird, wie dies in Fig. 1 zu erkennen ist.

Im Gegensatz zum Stand der Technik ist diese zweite Spanneinrichtung 12 am Handlingroboter 4 kompatibel zum ersten Spannelement 8 der Spannpaletten 2.1, 2.2, 2.3, 2.4. Damit kann das erste Spannelement 8 der Spannpaletten 2.1, 2.2, 2.3, 2.4, welches zum Nullpunktspannen mit der Werkzeugmaschine 3 dient, vom Handlingroboter 4 zur Manipulation der Spannpaletten 2.1, 2.2, 2.3, 2.4 verwendet werden, um Bewegungsaufgaben, beispielsweise ein Führen, Weitergeben, Positionieren etc., zu erfüllen. Dadurch kann der Handlingroboter 4 die Spannpaletten 2.1, 2.2, 2.3, 2.4 standfest fest halten und sicher von und zur Werkzeugmaschine 3 relativ bewegen - womit ein Beitrag zur reproduzierbaren Bestückung/Beladung der Werkzeugmaschine 3 geleistet wird. Auch kann damit die Steuerung der Vorrichtung 1 erheblich vereinfacht werden, weil handhabungsfreundlich ein von der jeweiligen Spanneinrichtung 9 bzw. 12 freigebendes erstes Spannelemente 8 von der jeweils anderen Spanneinrichtung 12 bzw. 9 lediglich übernommen werden muss. Ein reproduzierbares Verfahren zur indirekten Handhabung eines auf einer Spannpalette 2.1, 2.2, 2.3, 2.4 aufgespannten Werkstücks 5.1, 5.2, 5.3, 5.4 im Werkstückfluss kann auf diese Weise geschaffen werden.

Vorzugsweise ist das Spannsystem zwischen Handlingroboter 4 und Spannpalette 2.1, 2.2, 2.3, 2.4 als Nullpunktspannsystem 110 ausgebildet, was beispielsweise die Konstruktionsanforderungen zur Vorrichtung 1 weiter reduziert und auch hohe Standfestigkeit garantieren kann.

Die Vorrichtung 1 weist zudem eine Übergabeeinrichtung 13 auf, welche die Übernahme der Werkstücke 5.1, 5.2, 5.3, 5.4 von und zur Werkzeugmaschine 3 erleichtert. Diese Übergabeeinrichtung 13 ist zwischen Handlingroboter 4 und Werkzeugmaschine 3 im Werkstückfluss vorgesehen und ermöglicht nach der Freigabe des ersten Spannelements 8 der Spannpalette 2.1, 2.2, 2.3, 2.4, ein Spannen mit der ersten Spanneinrichtung 9 des Werkstückhalters 7 oder mit der zweiten Spanneinrichtung 12 des Handlingroboters 4. Hierzu hält die Übergabeeinrichtung 13 das von der ersten oder zweiten Spanneinrichtung 9, 12 freigegebene erste Spannelement 8 für ein Spannen frei zugänglich - wie in der Fig. 1 zu erkennen.

So bildet die Übergabeeinrichtung 13 eine Auflage 14 aus, auf welcher die jeweilige Spannpalette 2.1, 2.2, 2.3, 2.4 von der Werkzeugmaschine 3 oder vom Handlingroboter 4 eingehängt wird, bevor die Spannpalette 2.1, 2.2, 2.3, 2.4 von der jeweiligen anderen Spannvorrichtung 12, 9 festgehalten wird.

Die Auflage 14 der Übergabeeinrichtung 13 ist auf einem Schlitten 15 vorgesehen, der entlang einer Linearführung 15.1 bewegt werden kann, und damit die Spannpaletten 2.1, 2.2, 2.3, 2.4 zum jeweiligen Übergabebereich 16, 17 beim Handlingroboter 4 bzw. bei der Werkzeugmaschine 3 verfahren werden. Konstruktiv aufwendige Paletten-Wechseleinrichtung zum Ein- und Auswechseln von Spannpaletten 2.1, 2.2, 2.3, 2.4 erübrigen sich dadurch und vereinfachen die erfindungsgemäße Konstruktion erheblich.

Im Allgemeinen ist aber auch vorstellbar, dass die Auflage 14 unbeweglich ist und stationäre Übergabebereiche 16, 17 aufweist. Der Handlingroboter 4 bzw. die Werkstückhalter 7 bewegen bzw. holen dann von diesen Übergabebereichen 16, 17 die jeweiligen Spannpaletten 2.1, 2.2, 2.3, 2.4 - was in den Figuren allerdings nicht dargestellt ist.

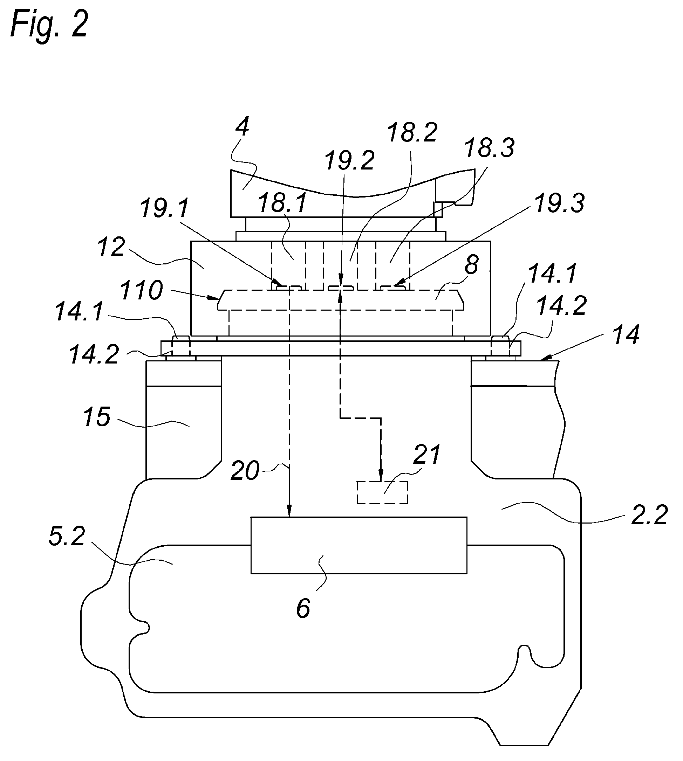

Diese Auflage 14 weist zudem, vorzugsweise bolzenförmige, Mitnehmer 14.1 auf, wie anhand der Fig. 2 zu erkennen. Diese Mitnehmer 14.1 greifen in Ausnehmungen 14.2 der Spannpaletten 2.1, 2.2, 2.3, 2.4 ein und sichern damit die Spannpaletten 2.1, 2.2, 2.3, 2.4 in der Lage auf der Auflage 14.

Wie zudem in Fig. 1 strichliert angedeutet, kann der Handlingroboter 4 auch zur indirekten Handhabung von Spannpalette 2.1, 2.2, 2.3, 2.4 zwischen mehreren Werkzeugmaschinen 3, 300 verwendet werden, um so ein flexibles Fertigungssystem (FFS) zu schaffen.

Die Handhabung der Spannpalette 2.2 durch den Handlingroboter 4 umfasst jedoch nicht nur Bewegungsaufgaben, sondern auch Aufgaben zum Sichern (z.B.: Spannen, Entspannen des jeweiligen Werkstücks 5.2) und Kontrollieren (z.B.: Anwesenheit eines Werkstücks 5.2) der Spannpalette 2.2, wie dies in Fig. 2 zu erkennen ist. Hierzu weist die zweite Spanneinrichtung 12 des Handlingroboters 4 mehrere Kupplungselemente 18.1, 18.2, 18.3 für Medienkupplungen 19.1, 19.2, 19.3 mit der Spannpalette 2.2 auf. Die pneumatische Medienkupplungen 19.1 ist über eine Leitung 20 mit der Werkstückspanneinrichtung 6 verbunden, wodurch der Handlingroboter 4 zum Rüsten oder Beschicken der Spannpalette 2.2 mit einem Werkstück 5.2 verwendbar ist. Die elektrische Medienkupplung 19.2 stellt eine elektrische Verbindung zwischen Handlingroboter 4 und Spannpaletten 2.2 her, um beispielsweise über einen Sensor 21 an der Spannpalette 2.2 die Anwesenheit des Werkstücks 5.2 zu erfassen. All das erweitert die Handhabungsfunktionen des Handlingroboters 4 erheblich und erhöht damit die Einsetzbarkeit der Vorrichtung 1 wesentlich.

## Patentansprüche

1. Verfahren zur indirekten Handhabung mindestens eines auf einer Spannpalette (2.1, 2.2, 2.3, 2.4) aufgespannten Werkstücks (5.1, 5.2, 5.3, 5.4) im Werkstückfluss zwischen Handlingroboter (4) und Werkzeugmaschine (3, 300), welche Werkzeugmaschine (3, 300) wenigstens eine erste Spanneinrichtung (9) eines Nullpunktspannsystems (10) aufweist, bei dem
die Spannpalette (2.1, 2.2, 2.3, 2.4), die mindestens ein erstes Spannelement (8) für das Nullpunktspannsystem (10) mit der Werkzeugmaschine (3, 300) aufweist, vom, mindestens eine zweite Spanneinrichtung (12) aufweisenden Handlingroboter (4) mit dieser zweiten Spanneinrichtung (12) gehalten und relativ zur Werkzeugmaschine (3, 300) bewegt wird und
die Spannpalette (2.1, 2.2, 2.3, 2.4) mit dem aufgespannten Werkstück (5.1, 5.2, 5.3, 5.4) an einem beweglichen und die erste Spanneinrichtung (9) aufweisenden Werkstückhalter (7) der Werkzeugmaschine (3, 300) nullpunkt-gespannt wird, indem das erste Spannelement (8) der Spannpalette (2.1, 2.2, 2.3, 2.4) mit der ersten Spanneinrichtung (9) am Werkstückhalter (7) verbunden wird,
**dadurch gekennzeichnet, dass**
die zweite Spanneinrichtung (12) des Handlingroboters (4) mit dem ersten Spannelement (8) der Spannpalette (2.1, 2.2, 2.3, 2.4) verbunden und damit die Spannpalette (2.1, 2.2, 2.3, 2.4) vom Handlingroboter (4) bei dieser Relativbewegung zur Werkzeugmaschine (3, 300) gehalten wird.

2. Verfahren nach Anspruch 1, **dadurch gekennzeichnet, dass** eine zwischen Handlingroboter (4) und Werkzeugmaschine (3, 300) im Werkstückfluss vorgesehene Übergabeeinrichtung (13) die Spannpalette (2.1, 2.2, 2.3, 2.4) übernimmt, wonach die erste oder zweite Spanneinrichtung (9, 12) das erste Spannelement (8) der Spannpalette (2.1, 2.2, 2.3, 2.4) freigibt.

3. Verfahren nach Anspruch 2, **dadurch gekennzeichnet, dass** die Übergabeeinrichtung (13) das von der ersten oder zweiten Spanneinrichtung (9, 12) freigegebene erste Spannelement (8) für ein Spannen frei zugänglich bereithält.

4. Verfahren nach Anspruch 2 oder 3, **dadurch gekennzeichnet, dass** der Handlingroboter (4) oder die Werkzeugmaschine (3, 300) die Spannpalette (2.1, 2.2, 2.3, 2.4) auf einer Auflage (14) der Übergabeeinrichtung (13) ablegt.

5. Verfahren nach Anspruch 4, **dadurch gekennzeichnet, dass** die auf einem Schlitten (15) der Übergabeeinrichtung (13) vorgesehene Auflage (14) die Spannpalette (2.1, 2.2, 2.3, 2.4) zur Werkzeugmaschine (3, 300) oder zum Handlingroboter (4) hin bewegt.

6. Verfahren nach einem der Ansprüche 1 bis 5, **dadurch gekennzeichnet, dass** der Werkstückhalter (7) der Werkzeugmaschine (3, 300) beim Nullpunktspannen zur lagefixierten Spannpalette (2.1, 2.2, 2.3, 2.4) hin bewegt wird.

7. Verfahren nach einem der Ansprüche 1 bis 6, **dadurch gekennzeichnet, dass** der über mindestens eine Medienkupplung (19.1, 19.2, 19.3) mit der Spannpalette (2.1, 2.2, 2.3, 2.4) verbindbare Handlingroboter (4) die Werkstückspanneinrichtung (6) an der jeweiligen Spannpalette (2.1, 2.2, 2.3, 2.4) betätigt.

8. Vorrichtung, insbesondere flexible Fertigungszelle, mit einer Spannpalette (2.1, 2.2, 2.3, 2.4) für mindestens ein Werkstück (5.1, 5.2, 5.3, 5.4), welche Spannpalette (2.1, 2.2, 2.3, 2.4) mindestens ein erstes Spannelement (8) für ein Nullpunktspannsystem (10) aufweist, mit mindestens einer Werkzeugmaschine (3, 300), insbesondere Transferzentrum, das einen beweglichen Werkstückhalter (7) mit einer ersten Spanneinrichtung (9) zur Nullpunktspannung des ersten Spannelements (8) der Spannpalette (2.1, 2.2, 2.3, 2.4) aufweist, mit einem Handlingroboter (4), der eine zweite Spanneinrichtung (12) zum Handling der Spannpalette (2.1, 2.2, 2.3, 2.4) aufweist, **dadurch gekennzeichnet, dass** die erste und zweite Spanneinrichtung (9, 12) von Werkstückhalter (7) und Handlingroboter (4) zum Spannen des ersten Spannelements (8) der Spannpalette (2.1, 2.2, 2.3, 2.4) ausgebildet sind und dass die Vorrichtung eine Übergabeeinrichtung (13) aufweist, die zwischen Handlingroboter (4) und Werkzeugmaschine (3, 300) im Werkstückfluss vorgesehen und derart ausgebildet ist, ein Spannen des ersten Spannelements (8) der Spannpalette (2.1, 2.2, 2.3, 2.4) mit der ersten Spanneinrichtung (9) des Werkstückhalters (7) oder mit der zweiten Spanneinrichtung (12) des Handlingroboters (4) zu ermöglichen.

9. Vorrichtung nach Anspruch 8, **dadurch gekennzeichnet, dass** die Übergabeeinrichtung (13) eine Auflage (14) für die Spannpalette (2.1, 2.2, 2.3, 2.4) aufweist.

10. Vorrichtung nach Anspruch 9, **dadurch gekennzeichnet, dass** die Auflage (14) auf einem Schlitten (15) vorgesehen ist.

11. Vorrichtung nach Anspruch 9 oder 10, **dadurch gekennzeichnet, dass** die Auflage (14) mindestens einen Mitnehmer (14.1) aufweist, der in wenigstens eine Ausnehmung (14.2) an der Spannpalette (2.1, 2.2, 2.3, 2.4) eingreifbar ausgebildet ist.

12. Vorrichtung nach einem der Ansprüche 8 bis 11, **dadurch gekennzeichnet, dass** die Übergabeeinrichtung (13) mindestens einen Übergabebereich zum Beund/oder Entladen mindestens einer Spannpalette (2.1, 2.2, 2.3, 2.4) aufweist.

13. Vorrichtung nach einem der Ansprüche 8 bis 12, **dadurch gekennzeichnet, dass** die erste und zweite Spanneinrichtung (9, 12) in ihrer konstruktiven Ausführung ident sind.

14. Vorrichtung nach einem der Ansprüche 8 bis 13, **dadurch gekennzeichnet, dass** die zweite Spanneinrichtung (12) des Handlingroboters (4) mindestens ein Kupplungselement (18.1, 18.2, 18.3) für eine Medienkupplung (19.1, 19.2, 19.3) mit der Spannpalette (2.1, 2.2, 2.3, 2.4) aufweist.

15. Vorrichtung nach einem der Ansprüche 8 bis 14, **dadurch gekennzeichnet, dass** die Medienkupplung (19.1, 19.2, 19.3) an der Spannpalette (2.1, 2.2, 2.3, 2.4) mit einer zum Spannen des Werkstücks (5.1, 5.2, 5.3, 5.4) vorgesehenen Werkstückspanneinrichtung (6) an der Spannpalette (2.1, 2.2, 2.3, 2.4) verbunden ist.
